# EUROPÄISCHE PATENTSCHRIFT

(11) **EP 1 839 941 B1**
(45) Veröffentlichungstag und Bekanntmachung des Hinweises auf die Patenterteilung: **09.01.2013**
(21) Anmeldenummer: 07004997.8
(22) Anmeldetag: 12.03.2007
(51) Int. Cl.: B60N 2/58, B60R 21/015

(54) **Sitzsteuereinrichtung**
Seat control device
Dispositif de commande de siège

(30) Priorität: 31.03.2006 US 394623
(43) Veröffentlichungstag der Anmeldung: 03.10.2007
(73) Patentinhaber: Volkswagen Aktiengesellschaft, 38440 Wolfsburg (DE); AUDI AG, 74148 Neckarsulm (DE)
(72) Erfinder: Derse, Michael, 94109 San Francisco, California (US); Strohband, Sven, Dr., 94043 Mountain View, California (US); Stoschek, Arne, Dr., 94303 Palo Alto, California (US); Ross, Steffen, 85139 Wettstetten (DE); NG, Brian, 95129 San Jose, California (US); Alessandrini, Philippe, 02138 Camrbridge, Massachusetts (US)

(56) Entgegenhaltungen:
- WO-A1-2005/091319
- DE-A1- 19 834 163
- DE-A1- 19 908 129
- US-A- 5 262 778
- US-A- 5 952 630
- US-A1- 2001 043 200
- US-A1- 2002 134 116

## Beschreibung

Die Erfindung betrifft eine Sitzsteuereinrichtung mit einem Berührungssensor und einem Steuerschaltkreis, der in Abhängigkeit von Signalen des Berührungssensors Steuersignale zum Steuern eines Fahrzeugsitzes erzeugt.

Fahrzeugsitze sind üblicherweise als verstellbare Sitze ausgebildet, die je nach Wunsch des Fahrzeuginsassen entlang einer Längsrichtung nach vorne und nach hinten verstellt werden können. Die Neigung der Rückenlehne des Fahrzeugsitzes ist im allgemeinen ebenfalls verstellbar. In zunehmenden Maße sind die Fahrzeugsitze fremdkraftbetätigte Sitze, d.h. elektrisch verstellbare Sitze, wobei der Fahrzeuginsasse den Fahrzeugsitz über eine Sitzsteuereinrichtung verstellt. Beispielsweise drückt der Fahrzeuginsasse eine Taste, um den Fahrzeugsitz nach vorne zu bewegen und drückt dann eine andere Taste, um die Neigung der Rückenlehne zu ändern.

Kraftfahrzeuge sind häufig mit elektrisch verstellbaren Sitzen ausgestattet, die eine Vielfalt an Verstellmöglichkeiten aufweisen. Beispielsweise können derartige Fahrzeugsitze nicht nur nach vorne und nach hinten bewegt werden, sondern können auch nach oben und nach unten bewegt werden. Weitere, den Komfort verbessernde Funktionen können eine verstellbare Lordosenstütze, eine Massagefunktion und eine Heiz- bzw. Kühlfunktion umfassen. Wenn der Fahrzeugsitz mit all diesen zusätzlichen Funktionen ausgestattet ist, dann ist eine größere Zahl von Tasten oder Schaltern zur Steuerung des Fahrzeugsitzes erforderlich. Die Sitzsteuereinrichtung für einen derartig ausgestatteten Fahrzeugsitz kann deshalb relativ groß ausfallen und benötigt infolgedessen einen größeren Einbauraum.

Die US-Patentschrift 5,668,357 offenbart eine Sitzsteuereinrichtung aus dem Stand der Technik mit einer plattenförmigen Schaltereinheit, die eine Platine mit einer Vielzahl von Kontakten enthält. Ein folienartiges Gummikontaktelement ist auf der Platine angeordnet. Das folienartige Gummikontaktelement weist konvexe Schalterabschnitte auf zum Öffnen und Schließen der Kontakte. Eine Deckplatte ist über der Schaltereinheit angebracht, die fest an einer Seitenfläche eines Sitzabschnitts montiert ist. Die Deckplatte hat Fensteröffnungen, wobei die Schalterabschnitte durch diese Fensteröffnungen freigelegt werden. Ein Nachteil dieser Sitzsteuereinrichtung ist, dass sie relativ groß ist und deshalb einen entsprechend großen Einbauraum benötigt.

Weitere Sitzsteuereinrichtungen sind aus der US 4,689,537, aus der EP 1 059 191 B1, der EP 1 031 457 B1, der DE 198 34 163 A1 und der DE 199 55 326 A1 bekannt.

Eine gattungsgemäße Bedieneinrichtung ist aus dem Dokument US-B-5 952 630 bekannt.

Herkömmliche Sitzsteuereinrichtungen von der oben beschriebenen Art haben ein Gehäuse für elektronischen Bauteile. Die Platzanforderungen für ein derartiges Gehäuse machen eine herkömmliche Sitzsteuereinrichtung relativ sperrig. Der Einbau der Sitzsteuereinrichtung ist deshalb auf die Stellen beschränkt, die die Einbauraumanforderungen der Sitzsteuereinrichtung erfüllen. Die Platzanforderungen für die elektronischen Teile der herkömmlichen Sitzsteuereinrichtungen verhindern außerdem, dass die Sitzbedienungslemente nahe aneinander platziert werden können oder in bestimmten geometrischen Anordnungen platziert werden können. Außerdem benötigen herkömmliche Sitzsteuereinrichtungen Befestigungsbügel oder andere Befestigungseinrichtungen, die es ermöglichen die Gehäuseteile mechanisch festzuhalten. Mit anderen Worten, der Einbauraum für herkömmliche Sitzsteuereinrichtungen muss eine gewisse mechanische Stabilität aufweisen und deshalb ist der Einbau auf die Stellen begrenzt, die mechanisch stabile Befestigungsstellen aufweisen.

Ein weiterer Aspekt bei herkömmlichen Sitzsteuereinrichtungen ist, dass die Sitzsteuereinrichtungen für verschiedene Fahrzeugplattformen und sogar für verschiedene Modelle der gleichen Fahrzeugplattform unterschiedlich sind. Infolgedessen muss eine Autofirma für die verschiedenen Modelle unterschiedliche Sitzsteuereinrichtungen mit der dazugehörigen Eingabeelektronik entwerfen, testen und herstellen. Zudem unterscheidet sich eine Sitzsteuereinrichtung für ein Auto mit einer speziellen Funktion, wie beispielsweise einer Lordosenstütze, von einer Sitzsteuereinrichtung für ein Auto ohne diese Funktion, da die Anzahl der Tasten und die Anordnung der Tasten unterschiedlich sind.

Ein weiterer Nachteil herkömmlicher Sitzsteuereinrichtungen ist, dass sie binäre Tasten haben, die nur eine einfache Ein-Aus-Funktion für eine Sitzverstellfunktion ermöglichen. Eine derartige Sitzsteuerung erlaubt kein variierendes Maß für die Eingabe durch einen Benutzer. Infolgedessen kann ein Benutzer die Geschwindigkeit, mit der der Benutzer den Fahrzeugsitz verstellen will, nicht auswählen. Dies kann es schwierig machen eine Feineinstellung des Fahrzeugsitzes durchzuführen.

Ein weiterer Nachteil herkömmlicher Sitzsteuereinrichtungen ist, dass sie eine Taste für jede Verstellrichtung benötigen. Wenn ein Fahrzeugsitz beispielsweise nach vorne, nach hinten, nach oben und nach unten bewegt werden kann, dann sind vier Tasten zum Verstellen der Position des Fahrzeugsitzes vorgesehen. Weitere Tasten sind für das Verstellen des Neigungswinkels der Rückenlehne vorgesehen, und möglicherweise sind noch zusätzliche Tasten vorgesehen, falls zusätzliche Verstellfunktionen vorgesehen sind. Ein Nachteil einer derartigen Sitzsteuereinrichtung ist, dass die große Zahl der Tasten zu einer komplizierten Bedienung führen kann. Zudem können sich die Herstellungskosten und die Einbauraumanforderungen mit zunehmender Anzahl der Tasten erhöhen.

Aufgrund der oben erwähnten Nachteile der herkömmlichen Sitzsteuereinrichtungen, die sich aus den Einbauraumanforderungen und den Schalteranordnungen ergeben, werden herkömmliche Sitzsteuereinrichtungen in Einbauräumen montiert, die große und sperrige Bauteile aufnehmen können. Herkömmliche Sitzbedienungselemente werden deshalb im allgemeinen in einem Sitzunterteil oder in einer Fahrzeugtür eingebaut.

Aufgabe der Erfindung ist demnach eine Sitzsteuereinrichtung zu schaffen, die auf praktisch allen Oberflächen eines Fahrzeuginnenraums eingebaut werden kann. Insbesondere soll die Sitzsteuereinrichtung sowohl für unterschiedliche Fahrzeugsitze also auch für unterschiedliche Fahrzeugmodelle verwendet werden können. Außerdem soll die Sitzsteuereinrichtung ein verbessertes Sitzverstellverfahren ermöglichen. Die Sitzsteuereinrichtung soll zudem die Anzahl der für die Sitzverstellung benötigten Tasten verringern und in einer ästhetisch ansprechenden Weise in den Fahrzeuginnenraum integriert werden können.

Die vorgenannte Aufgabe wird gelöst durch eine Sitzsteuereinrichtung mit einem Berührungssensor und einem Steuerschaltkreis, der in Abhängigkeit von Signalen des Berührungssensors Steuersignale zum Steuern eines Fahrzeugsitzes erzeugt, wobei der Berührungssensor ein auf einer Trägerschicht aufgebrachtes berührungsempfindliches Gewebe enthält, wobei der Berührungssensor Signale in Antwort auf eine auf dem berührungsempfindlichen Gewebe ausgeübten Kraft erzeugt, wobei der Steuerschaltkreis die vom Berührungssensor erzeugten Signale empfängt und den Ort der auf dem berührungsempfindlichen Gewebe ausgeübten Kraft bestimmt und wobei der Steuerschaltkreis die Steuersignale zum Steuern des Fahrzeugsitzes in Abhängigkeit vom Ort der auf dem berührungsempfindlichen Gewebe ausgeübten Kraft erzeugt.

Ein Vorteil der oben beschriebenen Sitzsteuereinrichtung ist, dass herkömmliche Schalter und Tasten, die mehr Einbauraum benötigen als ein Berührungssensor gemäß der vorliegenden Erfindung, eliminiert werden können, wobei der Berührungssensor ein im wesentlichen flacher Sensor ist, der einfach auf einer Trägerschicht platziert wird. Der Berührungssensor gemäß der vorliegenden Erfindung benötigt also keine Befestigungsbügel, Befestigungslöcher oder andere mechanische Befestigungsvorrichtungen wie dies bei Sitzverstellschaltern im Stand der Technik notwendig ist.

Die Sitzsteuereinrichtung gemäß der vorliegenden Erfindung hat ein Eingabetastfeld, das auf einem elektrisch leitendem Gewebe bzw. einem sogenannten elektronischen Gewebe beruht. Die Verwendung des berührungsempfindlichen Gewebes ermöglicht es die Sitzsteuereinrichtung als eine dünne, biegsame und programmierbare Eingabevorrichtung auszugestalten. Das berührungsempfindliche elektronische Gewebe ist beispielsweise nur ein paar Millimeter dick und ermöglicht damit die Herstellung sehr dünner Tasten. Da diese Tasten dünn und biegsam sind, können sie praktisch an jeder Stelle im Auto platziert werden, einschließlich an Steilen, an denen der Einbauraum begrenzt ist. Außerdem können diese Tasten auch an Stellen angebracht werden, an denen die Anbringung von harten Tasten ein Sicherheitsrisiko darstellen würde, wie zum Beispiel in Bereichen über einem im Armaturenbrett oder Lenkrad eingebauten Airbag.

Nach einem weiteren Merkmal der vorliegenden Erfindung umfasst der Berührungssensor eine Deckschicht und das berührungsempfindliche Gewebe ist zwischen der Trägerschicht und der Deckschicht angeordnet.

Nach einem weiteren Merkmal der vorliegenden Erfindung ist die Trägerschicht eine Fahrzeuginnenraumkomponente wie zum Beispiel ein Fahrzeugsitzunterteil, eine Mittelarmlehne, eine Türarmlehne, eine Türinnenverkleidung, ein Lenkrad, ein Armaturenbrett, eine Mittelkonsole oder eine Fernsteuerungseinheit.

In einer weiteren Ausgestaltung der vorliegenden Erfindung ist der Steuerschaltkreis so programmierbar, dass der Steuerschaltkreis und der Berührungssensor für unterschiedliche Fahrzeugsitze mit unterschiedlichen Verstellfunktionen verwendbar sind. Ein Vorteil eines programmierbaren Steuerschaltkreises ist, dass die gleiche Sitzsteuerhardware für verschiedene Sitze unterschiedlicher Automodelle, die verschiedene Sitzverstellfunktionen haben, verwendet werden kann. Zudem kann die Sitzfunktionalität jedes Jahr auf den aktuellen Stand gebracht werden, ohne dass eine neue Sitzsteuerhardware notwendig ist.

Fahrzeughersteller können so Kosten sparen, indem alte Sitzsteuergeräte für neue Fahrzeugmodelle einfach wieder verwendet werden. Ein weiterer Vorteil ist die Verringerung der Zahl der Teile im Lagerbestand des Fahrzeugherstellers, da das gleiche berührungsempfindliche Gewebe und die gleichen programmierbaren Steuerschaltkreise für verschiedene Fahrzeugmodelle verwendet werden können.

Weiterhin ermöglicht das berührungsempfindliche Gewebe, dass der Berührungssensor durch Programmierung auf unterschiedliche Art und Weise konfiguriert werden kann. Da sich die Hardware als solches, d.h. das berührungsempfindliche Gewebe, nicht ändert, kann das gleiche berührungsempfindliche Gewebeteil von Jahr zu Jahr in beliebigen Fahrzeugmodellen eingesetzt werden. Durch Umprogrammieren der Sitzsteuereinrichtung kann die Benutzerschnittstelle je nach den Anforderungen des Sitzdesigners geändert werden. Wenn beispielsweise bei einer Sitzsteuereinrichtung aus dem Stand der Technik eine Massagefunktion hinzugefügt werden soll, dann muss eine vollständig neue Sitzsteuereinrichtung entwickelt werden, um diese zusätzliche Funktion zu berücksichtigen. Im Gegensatz dazu kann bei der Verwendung des Berührungssensors gemäß der vorliegenden Erfindung die gleiche Hardware, d.h. das berührungsempfindliche Gewebe, verwendet werden, wobei mit einer anderen Programmierung zusätzlich eine Stelle auf dem berührungsempfindlichen Gewebe für eine Massagefunktion vorgesehen ist.

In einer weiteren Ausgestaltung der vorliegenden Erfindung weist der Berührungssensor erhabene (z. B. geprägte) graphische Symbole zum Anzeigen der Verstellfunktionen auf. Ein Vorteil der erhabenen graphischen Symbole ist, dass ein Benutzer den Sitz, ohne auf den Berührungssensor sehen zu müssen, einfach durch Ertasten der erhabenen graphischen Symbole verstellen kann. Dies ist vorteilhaft, wenn der Benutzer den Sitz während der Fahrt verstellen will.

Nach einem weiteren Merkmal der vorliegenden Erfindung weist der Berührungssensor erhabene Pfeile zum Anzeigen der jeweiligen Verstellrichtungen auf. Die Verwendung von Pfeilen auf den Berührungssensor ergibt eine intuitive Bedienung der Sitzverstelleinrichtung, da Pfeile problemlos als eine Richtung verstanden werden, entlang der der Fahrzeugsitz verstellt werden soll.

Nach einem weiteren Merkmal der vorliegenden Erfindung weist der Berührungssensor eine erhabene schematische Darstellung des Fahrzeugsitzes auf, um so die intuitive Bedienung der Sitzverstellung zu verbessern.

In einer weiteren Ausgestaltung der vorliegenden Erfindung ermittelt der Steuerschaltkreis die Höhe der auf dem berührüngsempfindlichen Gewebe ausgeübten Kraft und erzeugt die Steuersignale zum Steuern des Fahrzeugsitzes in Abhängigkeit vom Ort und der Höhe der auf dem berührungsempfindlichen Gewebe ausgeübten Kraft. Ein Vorteil der Sitzsteuerung in Abhängigkeit des Ortes der Krafteinwirkung, der in x-Koordinaten und y-Koordinaten ausgedrückt werden kann, und weiterhin in Abhängigkeit der Höhe der Kraft oder des Druckes in Richtung der z-Koordinate erlaubt eine intuitive Steuerung der Sitzverstellgeschwindigkeit. Zum Beispiel, je stärker der Benutzer drückt, desto schneller bewegt sich der Sitz.

In einer weiteren Ausgestaltung der vorliegenden Erfindung ist der Steuerschaltkreis so programmierbar, dass die Verstellgeschwindigkeit des Fahrzeugsitzes mit der Höhe der auf dem berührungsempfindlichen Gewebe ausgeübten Kraft zunimmt. Dieses Merkmal ermöglicht es dem Benutzer die Verstellgeschwindigkeit auszuwählen, wodurch es einfacher wird den Fahrzeugsitz schnell und zugleich genau zu verstellen.

In einer weiteren Ausgestaltung der vorliegenden Erfindung weist der Berührungssensor einen Unterbereich auf, der zum Verstellen einer Sitzkomponente vorgesehen ist, und der Steuerschaltkreis und der Berührungssensor sind so ausgebildet, dass die Sitzkomponente durch das Ausüben einer Kraft in der Form einer Gleitbewegung über den Unterbereich des Berührungssensors verstellbar ist. Die Sitzkomponente kann ein Sitzunterteils, eine Rückenlehne oder eine Kopfstütze sein. Ein Vorteil einer Konfiguration, die eine solche Vektoreingabe verwendet, die ein Einstellen des Fahrzeugsitzes durch eine Gleitbewegung oder Ziehbewegung ermöglicht, ist, dass keine individuellen Tasten oder Bereiche für jede Richtung notwendig sind. Mit anderen Worten, ein einzelner Unterbereich des Berührungssensors kann für mehr als eine Sitzverstellfunktion verwendet werden. Zum Beispiel kann ein Unterbereich dazu verwendet werden den Fahrzeugsitz nach vorne, nach hinten, nach oben und nach unten zu bewegen, indem man mit dem Finger in der entsprechenden Richtung über den Berührungssensor streicht.

In einer weiteren Ausgestaltung der vorliegenden Erfindung ermittelt der Steuerschaltkreis die Richtung der Gleitbewegung über den Unterbereich des Berührungssensor und erzeugt Steuersignale zum Steuern der Sitzkomponente in Abhängigkeit von der Richtung der Gleitbewegung über den Unterbereich des Berührungssensors.

In einer weiteren Ausgestaltung der vorliegenden Erfindung ermittelt der Steuerschaltkreis die Geschwindigkeit der Gleitbewegung über den Unterbereich des Berührungssensor und erzeugt Steuersignale zum Steuern der Sitzkomponente in Abhängigkeit von der Geschwindigkeit der Gleitbewegung über den Unterbereich des Berührungssensors. In diesen Fall kann ein Benutzer zum Beispiel die Verstellgeschwindigkeit ändern, indem er die Geschwindigkeit, mit der er mit dem Finger über den Unterbereich streicht, ändert.

Nach einem weiteren Merkmal der vorliegenden Erfindung sind der Steuerschaltkreis und der Berührungssensor so ausgebildet, dass der Steuerschaltkreis zwischen einer durch eine Gleitbewegung über den Unterbereich des Berührungssensors ausgeübten Kraft und einer nur an einem bestimmten Ort des Unterbereichs ausgeübten Kraft unterscheidet. In diesem Fall ermöglicht der Berührungssensor zum einen eine richtungsabhängige Eingabe, indem man mit dem Finger über den Unterbereich streicht, und zum anderen durch die gleiche Eingabevorrichtung eine Funktion, die dem Drücken einer Taste entspricht. Zum Beispiel kann der Berührungssensor so ausgebildet werden, dass ein Benutzer zum Verstellen eines Sitzes in eine bestimmte Richtung mit dem Finger in dieser Richtung über den Berührungssensor streicht. Der gleiche Bereich des Berührungssensors kann für die Funktion des Drückens einer Taste verwendet werden, da der Steuerschaltkreis so programmiert werden kann, dass er eine Kraft detektieren kann, die durch ein Tippen auf dem Berührungssensor erzeugt wird.

Der Aufbau und das Verfahren zum Betreiben der vorliegenden Erfindung sowie weitere Aufgaben und Vorteile der Erfindung ergeben sich aus der nachfolgenden Beschreibung einzelner Ausführungsformen in Kombination mit den Zeichnungen.
Fig. 1 zeigt eine schematische Übersicht einer Fahrzeugsitzanordnung mit einer Sitzsteuereinrichtung gemäß der vorliegenden Erfindung;
Fig. 2 zeigt eine perspektivische Ansicht eines Fahrzeugsitzes mit einem Berührungssensor, der in das Sitzunterteil integriert ist;
Fig. 3 zeigt eine schematische Teilansicht des in Fig. 2 dargestellten Sitzunterteils mit einem integrierten Berührungssensor;
Fig. 4 zeigt im Querschnitt eine schematische Teilansicht des in Fig. 3 gezeigten Berührungssensors;
Fig. 5 zeigt eine perspektivische Teilansicht einer Armlehne eines Fahrzeugs mit einer in die Armlehne integrierten Sitzbedienung;
Fig. 6 zeigt eine perspektivische Teilansicht einer Türinnenverkleidung eines Fahrzeugs mit einer in die Türinnenverkleidung integrierten Sitzbedienung;
Fig. 7 zeigt eine perspektivische Teilansicht einer Fernbedienungseinheit zum Steuern eines Fahrzeugsitzes; und
Fig. 8 zeigt eine perspektivische Teilansicht einer Türarmlehne eines Fahrzeugs mit einer in die Türarmlehne integrierten Sitzbedienung.

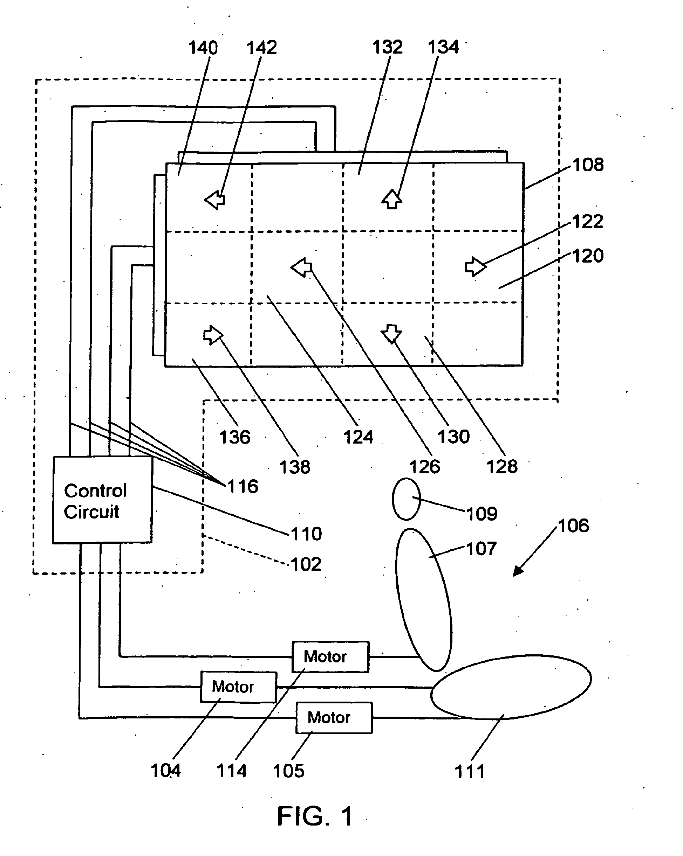

Im Detail zeigt Fig. 1 eine schematische Übersicht einer Fahrzeugsitzanordnung mit einer Sitzsteuereinrichtung 102, die mit mehreren Elektromotoren 104, 105, 114 verbunden ist, zum Verstellen eines Fahrzeugsitzes 106. Die Sitzsteuereinrichtung 102 umfasst einen Berührungssensor 108 und einen Steuerschaltkreis 110.

Der Berührungssensor 108 ist als ein sogenanntes elektronisches Gewebe ausgebildet. Ein solches berührungsempfindliches elektronisches Gewebe kann beispielsweise zwei elektrisch leitende Gewebeebenen enthalten, die durch ein zwischen die zwei elektrisch leitenden Gewebeebenen platziertes elektrisch isolierendes Gewebe voneinander getrennt sind. Die beiden elektrisch leitenden Gewebeebenen und die zwischen die beiden elektrisch leitenden Gewebeebenen platzierte elektrisch isolierende Gewebeebene sind zum Beispiel so ausgebildet, dass beim Ausüben einer Kraft auf das berührungsempfindliche elektronische Gewebe die beiden elektrisch leitenden Ebenen sich einander annähern und an der Stelle, an der die Kraft ausgeübt wird, ein elektrischer Strom zwischen den beiden elektrisch leitenden Ebenen fließen kann. Spezifische Ausführungsformen von elektronischen Geweben sind beispielsweise ausführlich in der US-Patentschrift 6,492,980 B2 beschrieben. Gemäß einer alternativen Ausführungsform der vorliegenden Erfindung kann das elektronische Gewebe ein kapazitiver Sensor sein, der einen Kontakt mit menschlicher Haut aufgrund einer Verringerung der Kapazität des Sensors bei Berührung detektiert.

Das berührungsempfindliche elektronische Gewebe des Berührungssensors 108 ist über Verbindungsleitungen 116 mit dem Steuerschaltkreis 110 verbunden. Die Verbindungsleitungen 116 werden dazu verwendet, um eine Versorgungsspannung für den Berührungssensor 108 bereitzustellen und um als Antwort auf ein Kraft, die auf den Berührungssensor 108 ausgeübt wird, Signale an den Steuerschaltkreis 110 zu leiten.

Der Berührungssensor kann konzeptionell in Unterbereiche unterteilt werden, die durch gestrichelte Linien in Fig. 1 angedeutet sind. Wenn auf einen der Unterbereiche eine Kraft ausgeübt wird, dann liefert der Berührungssensor 108 ein Signal an den Steuerschaltkreis 110, wodurch es dem Steuerschaltkreis 110 ermöglicht wird zu bestimmen welcher der Unterbereiche berührt worden ist. Der Steuerschaltkreis 110 ermittelt vorzugsweise nicht nur den Unterbereich oder Ort auf dem Berührungssensor 108, an dem die Kraft oder der Druck ausgeübt wurde, sondern ermittelt auch die Stärke bzw. Höhe der ausgeübten Kraft oder des ausgeübten Drucks.

Die Unterbereiche des Berührungssensors 108 sind verschiedenen Bedienfunktionen zugeordnet, die zum Verstellen des Fahrzeugsitzes benötigt werden. Bei der in Fig. 1 gezeigten Ausführungsform ist beispielsweise ein Unterbereich 120 der Funktion des Vorwärtsbewegens des Fahrzeugsitzes 106 zugeordnet. Ein Pfeil 122 ist in dem Unterbereich 120 angeordnet, um seine Bedienfunktion anzuzeigen. Wenn durch Drücken des Unterbereichs 120 eine Kraft ausgeübt wird, wird in Antwort auf diese Kraft ein Signal erzeugt. Der Steuerschaltkreis 110 stellt fest, dass auf den Unterbereich 120 eine Kraft ausgeübt wird und der Steuerschaltkreis 110 steuert einen entsprechenden Motor 104, damit der Motor 104 den Fahrzeugsitz 106 nach vorne bewegt.

In entsprechender Weise ist ein Unterbereich 124 der Funktion zum nach hinten Bewegen des Fahrzeugsitzes 106 zugeordnet. Ein Pfeil 126 ist in dem Unterbereich 124 angeordnet, um die Richtung anzuzeigen, in die der Sitz bewegt wird, wenn Druck auf den Unterbereich 124 ausgeübt wird. Wenn durch Drücken des Unterbereichs 124 eine Kraft ausgeübt wird, erzeugt der Berührungssensor 108 in Antwort auf diese Kraft ein Signal. Der Steuerschaltkreis 110 stellt fest, dass auf den Unterbereich 124 eine Kraft ausgeübt wird und der Steuerschaltkreis 110 steuert einen entsprechenden Motor 104, damit der Motor 104 den Fahrzeugsitz 106 nach hinten bewegt.

Ein weiterer Unterbereich 128 ist zum nach unten Bewegen des Fahrzeugsitzes 106 bestimmt. Ein Pfeil 130 im Unterbereich 128 zeigt die Richtung nach unten an. Wenn durch Drücken des Unterbereichs 128 eine Kraft ausgeübt wird, wird vom Berührungssensor 108 ein Antwortsignal erzeugt und der Steuerschaltkreis 110 wertet das Antwortsignal aus. Der Steuerschaltkreis 110 steuert einen entsprechenden Motor 105, damit der Motor 105 den Fahrzeugsitz 106 nach unten bewegt.

Ein Unterbereich 132 ist zum Verstellen des Fahrzeugsitzes 106 in Aufwärtsrichtung vorgesehen. Ein Pfeil 134 zeigt die Richtung an, in die der Sitz bewegt wird, wenn Druck auf den Unterbereich 132 ausgeübt wird. Der Berührungssensor 108 erzeugt ein Signal, das anzeigt, dass eine Kraft auf den Unterbereich 132 ausgeübt wird. In Antwort darauf steuert der Steuerschaltkreis 110 den Motor 105 so, dass durch ein nach oben Bewegen des Fahrzeugsitzes 106 eine Höhenverstellung ausgeführt wird.

Der Berührungssensor 108 hat weiterhin die Unterbereiche 136 und 140 zum Verstellen der Rückenlehne 107 des Fahrzeugsitzes 106. Der Unterbereich 136 wird benutzt, um die Rückenlehne nach vorne, in eine aufrecht Stellung zu bringen. Ein Pfeil 138 im Unterbereich 136 zeigt die Bewegungsrichtung der Rückenlehne 107 an. Wenn durch Drücken des Unterbereichs 136 eine Kraft ausgeübt wird, wird vom Berührungssensor 108 ein Antwortsignal erzeugt. Der Steuerschaltkreis 110 empfängt das Antwortsignal und wertet es aus und veranlasst den Motor 114 dazu die Rückenlehne nach vorne, in eine aufrechte Stellung zu bringen.

In entsprechender Weise ist ein Unterbereich 140 vorhanden, um die Rückenlehne 107 des Fahrzeugsitzes 106 nach hinten, in eine zurückgelehnte Stellung zu bringen wie dies durch einen Pfeil 142 angedeutet ist. Wenn Druck auf den Unterbereich 140 ausgeübt wird, wird ein Signal erzeugt, das anzeigt, dass eine Kraft auf den Unterbereich 140 ausgeübt. Der Motor 114 bewegt dann die Rückenlehne 107 des Fahrzeugsitzes 106 in eine zurückgelehnte Stellung.

Der Berührungssensor 108 ist vorzugsweise nicht nur in der Lage zu erkennen welcher Unterbereich einem Druck ausgesetzt ist, sondern ist auch in der Lage die Stärke des Drucks bzw. der Kraft feststellen. Gemäß einer solchen Ausführungsform des Berührungssensors 108, wäre der Steuerschaltkreis 110 dann so ausgestaltet, dass er die Geschwindigkeit der Motoren 104, 105, 114 entsprechend der Höhe des auf dem Berührungssensor 108 ausgeübten Druckes steuert. Wenn beispielsweise eine kleine Kraft auf den Unterbereich 120 ausgeübt wird, dann würde der Steuerschaltkreis 110 den Motor 104 so steuern, dass der Fahrzeugsitz 106 langsam nach vorne bewegt wird. Wenn andererseits eine große Kraft auf den Unterbereich 120 ausgeübt wird, dann würde der Steuerschaltkreis den Motor 104 so steuern, dass der Fahrzeugsitz 106 schnell nach vorne bewegt wird. Ein Benutzer könnte auf diese Weise die Geschwindigkeit, mit der sich der Fahrzeugsitz 106 bewegt, erhöhen oder erniedrigen, indem er den Druck auf den Unterbereich 120 erhöht oder erniedrigt. Der Steuerschaltkreis 110 kann so konfiguriert werden, dass er die Funktionen aller Unterbereiche 120, 124, 128, 132, 136, 140 so steuert, dass sich die Verstellgeschwindigkeit entsprechend dem auf dem jeweiligen Unterbereich ausgeübten Druck ändert.

Der Berührungssensor 108 in Fig. 1 ist konzeptionell in zwölf Unterbereiche unterteilt, wie dies durch die gestrichelten Linien angedeutet ist. Zur Erklärung des Konzepts der Sitzsteuereinrichtung gemäß der Erfindung sind nur die Sitzverstellfunktionen für sechs der Unterbereiche beschrieben. Weitere Sitzverstellfunktionen können zusätzlich für den Berührungssensor 108 vorgesehen werden. Beispielsweise könnte die Kopfstütze 109 des Fahrzeugsitzes 106 über den Berührungssensor 108 verstellt werden. Eine einstellbare Lordosenstütze könnte zusätzlich für den Fahrzeugsitz 106 vorgesehen werden und könnte mit dem Berührungssensor 108 eingestellt werden. Weitere Funktionen, wie zum Beispiel eine Sitzheizungsfunktion oder Sitzkühlungsfunktion, könnten ebenfalls mit dem Berührungssensor 108 gesteuert werden. Der Berührungssensor 108 ist konzeptionell als ein in rechteckige Unterbereiche unterteilter Sensor dargestellt, wobei jedoch darauf hinzuweisen ist, dass die Unterbereiche beliebige Bereiche sein können, die in Abhängigkeit davon geschaffen werden, wie der Steuerschaltkreis 110 programmiert wird.

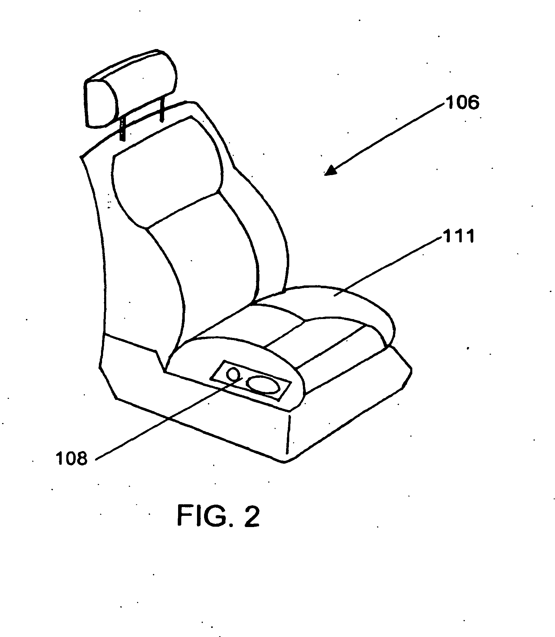

Fig. 2 zeigt eine perspektivische Ansicht eines Fahrzeugsitzes 106 mit einem Berührungssensor 108, der in das Sitzunterteil 111 integriert ist. Der Berührungssensor 108 ist in eine Seite des Sitzunterteils 111 integriert. Der Berührungssensor 108, der aus einem berührungsempfindlichen elektronischem Gewebe hergestellt ist, ist nur ein paar Millimeter dick und kann deshalb leicht an der Seite des Sitzunterteils 111 integriert werden. Da das berührungsempfindliche Gewebe, das den Berührungssensor 108 bildet, flächenhaft und biegsam ist, kann es einfach an einer Auflageschicht oder Trägerschicht 404 befestigt werden, wie zum Beispiel an einer Fahrzeuginnenraumkomponente, ohne dass irgendwelche Befestigungsbügel oder ähnliche Einbaubauteile benötigt werden, wie sie zum mechanischen Festzuhalten der herkömmlichen Sitzsteuereinrichtungen notwendig sind.

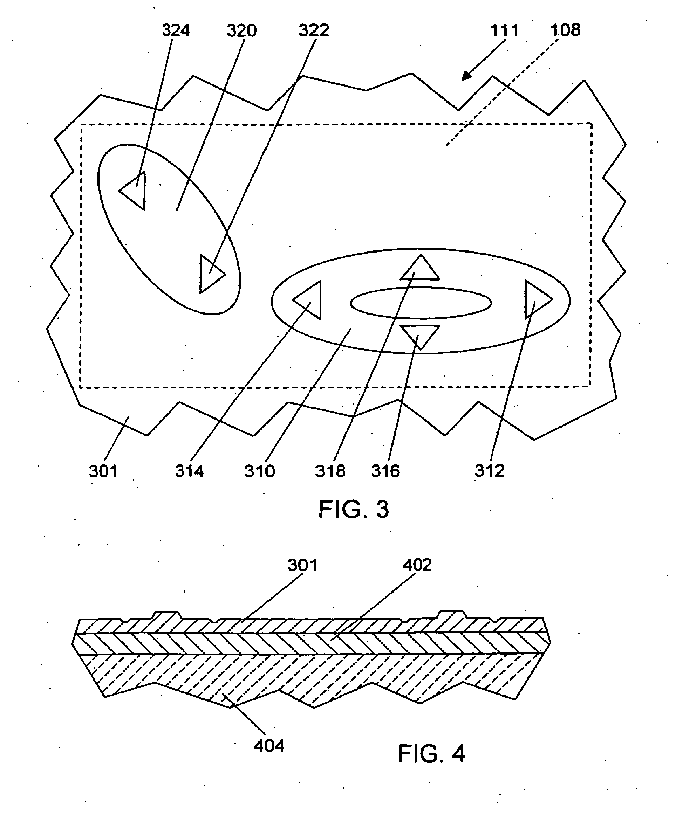

Fig. 3 zeigt eine schematische Teilansicht des Sitzunterteils 111 mit einem integrierten Berührungssensor 108. Genauer gesagt zeigt Fig. 3 einen Teil der Seitenfläche des in Fig. 2 gezeigten Sitzunterteils 111 des Fahrzeugsitzes 106. In der beispielhaften Ausführungsform ist dieser Teil der Seitenfläche des Sitzunterteils 111 eine Lederoberfläche 301, wobei eine Pfeilgraphik in das Leder geprägt ist. Beispielsweise ist also die graphische Darstellung der Pfeile eine erhabene Graphik. Die Lederoberfläche 301 bildet die Oberfläche des Fahrzeugsitzes und infolgedessen ist die Sitzbedienung in einer ästhetisch ansprechenden Weise in den Fahrzeugsitz integriert. Das berührungsempfindliche Gewebe 402, das den Berührungssensor 108 bildet, ist unter der Lederoberfläche 301 angeordnet.

Die in Fig. 3 gezeigte Pfeilgraphik kann in der gleichen Weise ausgebildet werden wie die in Fig. 1 gezeigten Pfeile. Die jeweiligen Unterbereiche des Berührungssensors 108 würden dabei so angeordnet werden, dass sie unter einem entsprechenden in der Lederoberfläche eingeprägten Pfeil positioniert sind.

In diesem Fall würde dann das Oval 310, das die vier Pfeile 312, 314, 316, 318 einkreist, das Sitzunterteil 111 repräsentieren und die vier Pfeile 312, 314, 316, 318 repräsentieren die vier Richtungen zum Verstellen des Fahrzeugsitzunterteils 111. Beim Ausüben von Druck auf den Pfeil 312, der in die Vorwärtsrichtung zeigt, würde sich der Fahrzeugsitz 106 nach vorne bewegen. Druck auf dem Pfeil 314, der in die entgegengesetzte Richtung zeigt, würde den Fahrzeugsitz nach hinten bewegen. Beim Drücken des Pfeils 316, der nach unten weist, würde den Fahrzeugsitz 106 nach unten bewegen und beim Drücken des Pfeils 318, der nach oben weist, würde sich der Fahrzeugsitz 106 nach oben bewegen. Die Pfeile 312, 314, 316, 318 in dem Oval 310 ermöglichen deshalb eine Verstellung des Fahrzeugsitzes in Richtung der Längsachse des Fahrzeugs und ermöglichen außerdem eine Verstellung der Sitzhöhe.

Weiterhin würde in dem in Fig. 3 gezeigten Ausführungsbeispiel das Oval 320 die Rückenlehne 107 des Fahrzeugsitzes 106 repräsentieren. Die Pfeile 322, 324, die von dem Oval 320 umschlossen werden, zeigen die Verstellrichtungen an. Genauer gesagt, durch Drücken des des Pfeils 322 könnte die Rückenlehne nach vorne, in eine aufrechte Stellung bewegt werden. Drücken des Pfeils 324 würde die Rückenlehne 107 nach hinten, in eine zurückgelehnte Stellung bewegen.

Fig. 4 zeigt im Querschnitt eine schematische Teilansicht des in Fig. 3 gezeigten Berührungssensors. Die in Fig. 4 gezeigte Ausführungsform weist ein berührungsempfindliches Gewebe 402 auf, das von einer Deckschicht 301 überdeckt ist, wobei die Deckschicht 301 in diesem Fall aus einer geprägten Lederschicht besteht. Die Deckschicht 301 ermöglicht eine ästhetisch ansprechende Integration des Berührungssensors 108 in Fahrzeuginnenraumkomponenten wie zum Beispiel in Armlehnen, in Fahrzeuginnenverkleidungsteilen, in Sitzflächen, in Armaturenbrettern oder in Lenkrädern. Im vorliegenden Fall ist der Berührungssensor 108 in das Sitzunterteil (Sitzuntergestell) 111 des Fahrzeugsitzes 106 integriert. Das berührungsempfindliche Gewebe 402 ist auf einer Trägerschicht 404 angeordnet. Befestigungsvorrichtungen wie beispielsweise Befestigungsbügel (Befestigungsklammern), Schrauben oder ähnliches sind nicht notwendig. Wie aus Fig. 4 ersichtlich ist, ist der Berührungssensor 108 ein im wesentlichen flächenhafter Sensor, der nur ein paar Millimeter dick ist. Da keine Befestigungsvorrichtungen nötig sind und da das berührungsempfindliche Gewebe 402 biegsam ist, kann der Berührungssensor 108 im wesentlichen auf jeder beliebigen Oberfläche im Fahrzeuginnenraum installiert werden, selbst wenn die Oberfläche gekrümmt ist. Der Berührungssensor 108 kann sogar auf einem Teil des Lenkrades oder Armaturenbretts befestigt werden, der als Airbagabdeckung dient.

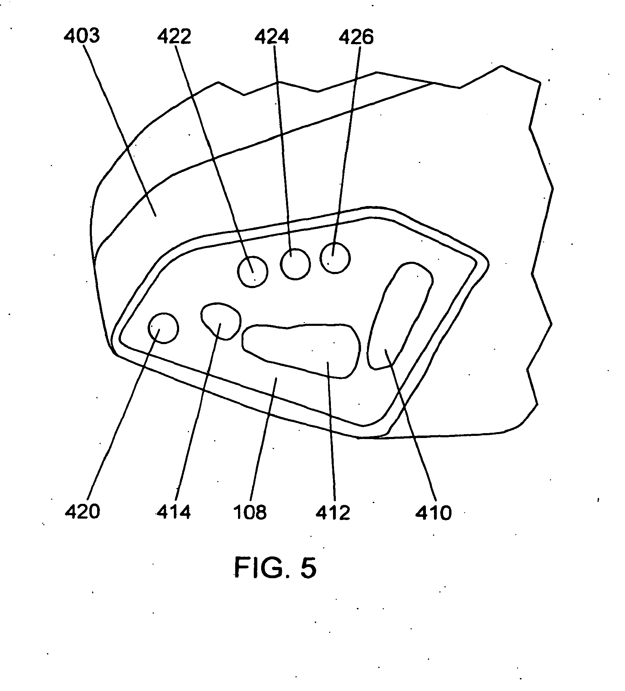

Fig. 5 zeigt eine perspektivische Teilansicht einer Armlehne eines Fahrzeugs mit einer in die Armlehne integrierten Sitzbedienung. Eine Armlehne 403, die neben einen Fahrzeugsitz 106 angeordnet ist, enthält einen Berührungssensor 108. Der Berührungssensor 108 umfasst, wie oben beschrieben, ein berührungsempfindliches Gewebe 402. Das berührungsempfindliche Gewebe 402 kann unter einer Deckschicht 301, wie zum Beispiel einer Lederoberfläche, einer Plastikoberfläche oder eine anderen Gewebeoberfläche, platziert werden. Wenn das berührungsempfindliche Gewebe 402 unter einer Deckschicht 301 platziert wird, ergibt sich eine homogene, d.h. durchgehend einheitliche Oberflächenstruktur für die Armlehne 403. Der Berührungssensor 108 weist ein graphisches Symbol für den Fahrzeugsitz auf. Das graphische Symbol ist vorzugsweise so ausgebildet, dass es beim Berühren erkannt werden kann. Das graphische Symbol kann beispielsweise eine erhabene Struktur sein oder kann eine Oberflächenstruktur aufweisen, die sich von der Oberflächenstruktur des umgebenden Materials unterscheidet.

In der beispielhaften Ausführungsform stellt das graphische Symbol ein Sitzunterteil 410, eine Rückenlehne 412 und eine Kopfstütze 414 dar. Der Berührungssensor 108 und der Steuerschaltkreis 110 können so konfiguriert werden, dass die Sitzverstellung auf eine intuitive Art und Weise vorgenommen werden kann. Beispielsweise können der Berührungssensor 108 und der Steuerschaltkreis 110 so ausgestaltet werden, dass ein Benutzer durch Drücken auf den vorderen Teil der Darstellung des Sitzunterteils 410 den Fahrzeugsitz 106 nach vorne bewegen kann. Umgekehrt könnte ein Benutzer den Fahrzeugsitz 106 nach hinten bewegen, indem er auf den hinteren Teil der Darstellung des Sitzunterteils 410 drückt.

In ähnlicher Weise kann der Berührungssensor 108 und der Steuerschaltkreis 110 so ausgestaltet werden, dass die Rückenlehne 107 nach vorne, in eine aufrechte Stellung gebracht wird, wenn man auf einen vorderen Teil der Darstellung 412 der Rückenlehne auf dem Berührungssensor 108 drückt. In entsprechender Weise kann die Rückenlehne 107 des Fahrzeugsitzes durch Drücken auf den hinteren Teil der Darstellung 412 der Rückenlehne auf dem Berührungssensor 108 nach hinten, in eine zurückgelehnte Stellung gebracht. Die Kopfstütze 109 kann in der gleichen Weise verstellt werden wie das Sitzunterteil 111 und die Rückenlehne 107.

Gemäß einem weiteren Merkmal des Berührungssensors 108 ist die Verstellgeschwindigkeit abhängig von der Höhe des Drucks, der auf den Berührungssensor 108 ausgeübt wird. Eine Erhöhung des Drucks auf dem Berührungssensor 108 würde die Geschwindigkeit, mit der der Fahrzeugsitz 106 verstellt wird, erhöhen.

Gemäß einer alternativen Ausführungsform können der Berührungssensor 108 und der Steuerschaltkreis 110 so ausgestaltet werden, dass der Fahrzeugsitz 106 entsprechend dem Druck auf dem Berührungssensor 108 verstellt wird, der ausgeübt wird, wenn man mit einem Finger über den Berührungssensor streicht. In diesem Fall würde der Berührungssensor 108 in ähnlicher Weise funktionieren wie ein Tastfeld (Touchpad) eines Computers. Dabei würde sich der Fahrzeugsitz 106 nach vorne bewegen, wenn man mit dem Finger in Richtung von hinten nach vorne über die Darstellung des Sitzunterteils 410 streicht. Wenn man mit dem Finger in Richtung von vorne nach hinten über die Darstellung des Sitzunterteils 410 streicht, bewegt sich der Fahrzeugsitz 106 nach hinten.

In entsprechender Weise würde sich die Rückenlehne 107 des Fahrzeugsitzes 106 nach vorne, in eine aufrechte Stellung bewegen, wenn man mit dem Finger mit einer vorwärts gerichteten Bewegung über die Darstellung 412 der Rückenlehne auf dem Berührungssensor 108 streicht. Die Rückenlehne 107 des Fahrzeugsitzes 106 bewegt sich entsprechend nach hinten, in eine zurückgelehnte Stellung, wenn man mit dem Finger mit einer nach hinten gerichteten Bewegung über die Darstellung 412 der Rückenlehne auf dem Berührungssensor 108 streicht. Die Kopfstütze 109 würde entsprechend verstellt werden, indem man mit dem Finger in der gewünschten Verstellrichtung über die Darstellung 414 der Kopfstütze streicht.

Weitere Sitzverstellfunktionen werden mit Hilfe der weiteren Sitzbedienungsbereiche 420, 422, 424, 426 auf dem Berührungssensor 108 durchgeführt. Mindestens einige der Sitzbedienungsbereiche oder Sitzbedienungsfelder 420, 422, 424, 426 werden als Speichertasten verwendet, die den Fahrzeugsitz 106 entsprechend einer Vorliebe eines bestimmten Benutzers verstellen.

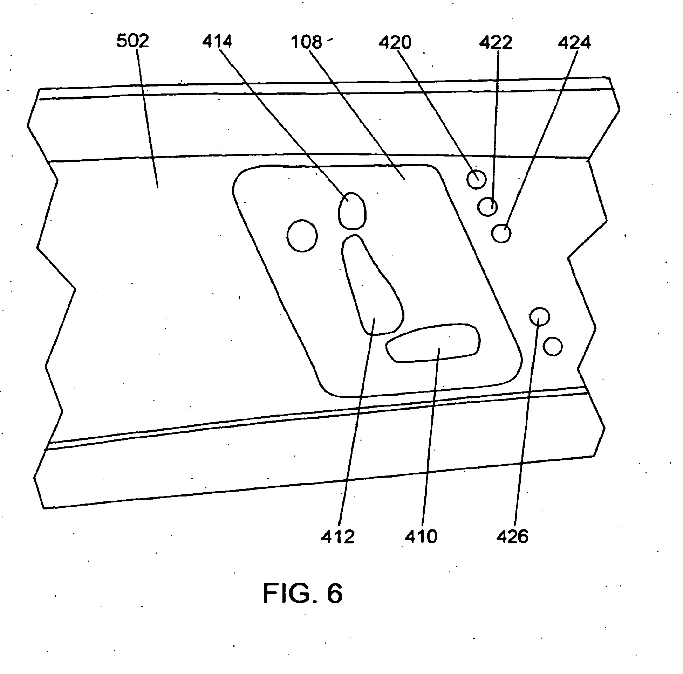

Fig. 6 zeigt eine perspektivische Teilansicht einer Türinnenverkleidung 502 eines Fahrzeugs mit einer in die Türinnenverkleidung 502 integrierten Sitzbedienung. Die Türinnenverkleidung 502 enthält einen Berührungssensor 108 mit einem berührungsempfindlichen Gewebe, das wie oben beschrieben ausgebildet ist. Das berührungsempfindliche Gewebe kann unter einer Deckschicht, wie zum Beispiel einer Lederoberfläche, einer Plastikoberfläche oder einer weiteren Gewebeoberfläche, platziert werden, um eine homogene Oberflächenstruktur, d.h. eine einheitliche Oberflächenbeschaffenheit, auf der Türinnenverkleidung 502 zu schaffen. Der Berührungssensor 108 weist ein graphisches Symbol eines Fahrzeugsitzes auf, das ein Sitzunterteil 410, eine Rückenlehne 412 und eine Kopfstütze 414 umfasst. Der Berührungssensor 108 und der Steuerschaltkreis 110 können in der gleichen Art und Weise ausgeführt werden wie es oben für den in die Armlehne 403 integrierten Berührungssensor 108 beschrieben ist. Wie oben ausgeführt ist, kann der Berührungssensor 108 so ausgestaltet werden, dass der Fahrzeugsitz nach vorne bewegt wird, wenn man auf den vorderen Teils der Abbildung des Sitzunterteils 410 drückt oder mit dem Finger in der beabsichtigten Bewegungsrichtung, d.h. von hinten nach vorne, über die Abbildung des Sitzunterteils 410 streicht. Der Fahrzeugsitz 106 kann in entsprechender Weise nach hinten bewegt werden, wenn man auf den hinteren Teil der Abbildung des Sitzunterteils 410 drückt öder wenn man mit dem Finger in der gewünschten Bewegungsrichtung über die Abbildung des Sitzunterteils 412 streicht.

Die Rückenlehne 107 des Fahrzeugsitzes 106 kann nach dem gleichen Prinzip verstellt werden, d.h. die Rückenlehne 107 kann nach vorne, in eine aufrechte Stellung bewegt werden, wenn man auf einen vorderen Bereich der Abbildung 412 der Rückenlehne auf dem Berührungssensor 108 drückt oder wenn man mit dem Finger in der gewünschten Bewegungsrichtung über die Abbildung 412 der Rückenlehne streicht. Die Kopfstütze des Fahrzeugsitzes ist in der gleichen Art und Weise einstellbar. Gemäß einem zusätzlichen Merkmal des Berührungssensors 108 ist die Verstellgeschwindigkeit abhängig von der Höhe des Drucks, der auf den Berührungssensor ausgeübt wird. Weitere Sitzbedienungsfunktionen, wie zum Beispiel eine Sitzpositionsspeicherungsfunktion oder eine Sitzheizungsfunktion, werden mit Hilfe von weiteren Sitzbedienungsbereichen 420, 422, 424, 426 auf dem Berührungssensor 108 ausgeführt.

Gemäß einer alternativen Ausführungsform kann der Fahrzeugsitz 106 gesteuert werden, indem zuerst ein Sitzteil, das verstellt werden soll, ausgewählt wird und dann das Sitzteil in eine gewünschte Richtung bewegt wird, indem man mit dem Finger in der gewünschten Richtung über einen Unterbereich streicht. Wenn ein Benutzer beispielsweise die Rückenlehne nach vorne, in eine aufrechte Stellung bringen will, kann der Benutzer die Rückenlehne auswählen, indem er auf die Abbildung 412 der Rückenlehne drückt. Nachdem die Rückenlehne auf diese Weise ausgewählt wurde, kann der Benutzer mit dem Finger in einer vorwärts gerichteten Bewegung über einen Unterbereich des Berührungssensors streichen. Die Rückenlehne wird dann in die gewünschte Richtung verstellt.

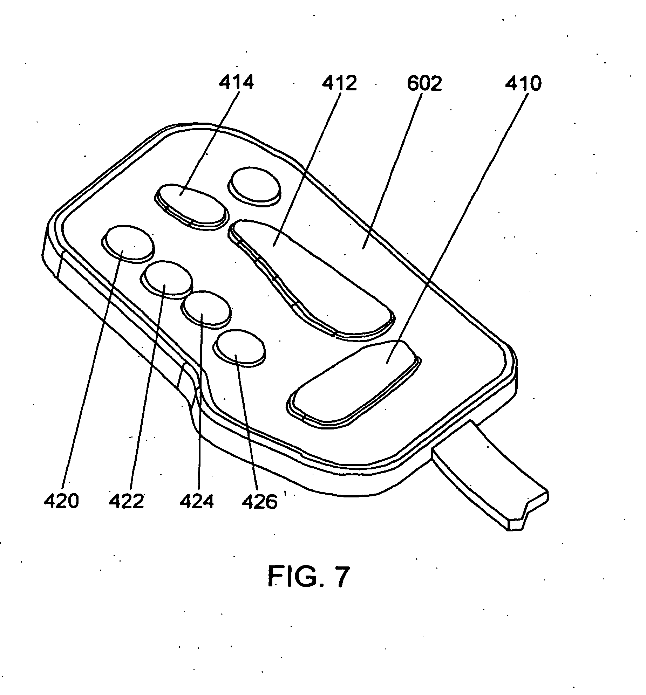

Fig. 7 zeigt eine perspektivische Teilansicht einer Fernbedienungseinheit 602 zum Steuern eines Fahrzeugsitzes. Die Fernbedienungseinheit 602 hat einem Berührungssensor 108 mit einem graphischen Symbol des Fahrzeugsitzes womit ein Benutzer den Fahrzeugsitz 106 in der gleichen Weise verstellen kann wie es für die in Fig. 1 bis 6 gezeigten Ausführungsformen beschrieben ist.

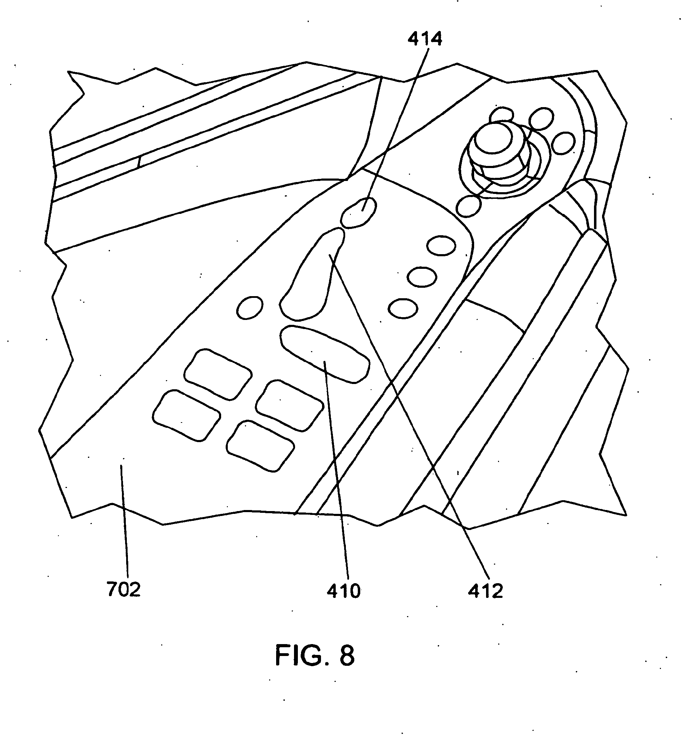

Fig. 8 zeigt eine perspektivische Teilansicht einer Türarmlehne 702 eines Fahrzeugs mit einer in die Armlehne integrierten Sitzbedienung. Ein Berührungssensor 108 mit einem graphischen Symbol eines Fahrzeugsitzes ist in die Armlehne integriert. Der Berührungssensor 108 funktioniert in der gleichen Weise wie die Berührungssensoren 108 der oben beschrieben Ausführungsformen.

### Bezugszeichenliste

- 102: Sitzsteuereinrichtung
- 104, 105, 114: Elektromotoren
- 106: Fahrzeugsitz
- 107: Rückenlehne
- 108: Berührungssensor
- 109: Kopfstütze
- 110: Steuerschaltkreis
- 111: Sitzunterteil
- 116: Verbindungsleitungen
- 120, 124, 128, 132, 136, 140: Unterbereiche des Berührungssensors
- 122, 126, 130, 134, 138, 142: Pfeile zum Anzeigen der Verstellrichtungen
- 301: Deckschicht
- 310, 320: Oval als graphische Darstellung des Sitzunterteils bzw. der Rückenlehne
- 312, 314, 316, 318, 322, 324: Pfeile zum Anzeigen der Verstellrichtungen
- 402: berührungsempfindliches Gewebe
- 403: Armlehne
- 404: Trägerschicht
- 410: graphische Darstellung des Sitzunterteils
- 412: graphische Darstellung der Rückenlehne
- 414: graphische Darstellung der Kopfstütze
- 420, 422, 424, 426: Sitzbedienungsbereiche auf dem Berührungssensor
- 502: Türinnenverkleidung
- 602: Fernbedienungseinheit
- 702: Türarmlehne

## Patentansprüche

1. Sitzsteuereinrichtung mit einem Berührungssensor (108) und einem Steuerschaltkreis (110), der in Abhängigkeit von Signalen des Berührungssensors Steuersignale zum Steuern eines Fahrzeugsitzes (106) erzeugt, **dadurch gekennzeichnet, dass** der Berührungssensor (108) ein auf einer Trägerschicht (404) aufgebrachtes berührungsempfindliches Gewebe (403) enthält, dass der Berührungssensor (108) Signale in Antwort auf eine auf dem berührungsempfindlichen Gewebe (402) ausgeübten Kraft erzeugt, dass der Steuerschaltkreis (110) die vom Berührungssensor (108) erzeugten Signale empfängt und den Ort der auf dem berührungsempfindlichen Gewebe (402) ausgeübten Kraft bestimmt und dass der Steuerschaltkreis (110) die Steuersignale zum Steuern des Fahrzeugsitzes (106) in Abhängigkeit vom Ort der auf dem berührungsempfindlichen Gewebe (402) ausgeübten Kraft erzeugt.

2. Sitzsteuereinrichtung nach Anspruch 1, **dadurch gekennzeichnet, dass** der Berührungssensor (108) eine Deckschicht (301) umfasst und das berührungsempfindliche Gewebe (401) zwischen der Trägerschicht (404) und der Deckschicht (301) angeordnet ist.

3. Sitzsteuereinrichtung nach Anspruch 1 oder 2, **dadurch gekennzeichnet, dass** die Trägerschicht (301) eine Fahrzeuginnenraumkomponente ist.

4. Sitzsteuereinrichtung nach Anspruch 3, **dadurch gekennzeichnet, dass** die Fahrzeuginnenraumkomponente ein Fahrzeugsitzunterteil (111), eine Mittelarmlehne (403), eine Türarmlehne (702), eine Türinnenverkleidung (502), ein Lenkrad, ein Armaturenbrett, eine Mittelkonsole oder eine Fernsteuerungseinheit (602) ist.

5. Sitzsteuereinrichtung nach wenigstens einem der vorhergehenden Ansprüche, **dadurch gekennzeichnet, dass** der Steuerschaltkreis (110) so programmierbar ist, dass der Steuerschaltkreis (110) und der Berührungssensor (108) für unterschiedliche Fahrzeugsitze mit unterschiedlichen Verstellfunktionen verwendbar sind.

6. Sitzsteuereinrichtung nach wenigstens einem der vorhergehenden Ansprüche, **dadurch gekennzeichnet, dass** der Berührungssensor (108) erhabene graphische Symbole (312, 314, 316, 318, 322, 324) zum Anzeigen der Verstellfunktionen aufweist.

7. Sitzsteuereinrichtung nach wenigstens einem der vorhergehenden Ansprüche, **dadurch gekennzeichnet, dass** der Berührungssensor (108) erhabene Pfeile (312, 314, 316, 318, 322, 324) zum Anzeigen der jeweiligen Verstellrichtungen aufweist.

8. Sitzsteuereinrichtung nach wenigstens einem der vorhergehenden Ansprüche, **dadurch gekennzeichnet, dass** der Berührungssensor (108) eine erhabene schematische Darstellung des Fahrzeugsitzes (410, 412, 414) aufweist.

9. Sitzsteuereinrichtung nach wenigstens einem der vorhergehenden Ansprüche, **dadurch gekennzeichnet, dass** der Steuerschaltkreis (110) die Höhe der auf dem berührungsempfindlichen Gewebe (402) ausgeübten Kraft ermittelt und die Steuersignale zum Steuern des Fahrzeugsitzes (106) in Abhängigkeit vom Ort und der Höhe der auf dem berührungsempfindlichen Gewebe (402) ausgeübten Kraft erzeugt.

10. Sitzsteuereinrichtung nach wenigstens einem der vorhergehenden Ansprüche, **dadurch gekennzeichnet, dass** der Steuerschaltkreis (110) so programmierbar ist, dass die Verstellgeschwindigkeit des Fahrzeugsitzes (106) mit der Höhe der auf dem berührungsempfindlichen Gewebe ausgeübten Kraft zunimmt.

11. Sitzsteuereinrichtung nach wenigstens einem der vorhergehenden Ansprüche, **dadurch gekennzeichnet, dass** der Berührungssensor (108) einen Unterbereich (120, 124, 128, 132, 136, 140; 310, 320; 410, 412, 414) aufweist, der zum Verstellen einer Sitzkomponente (107; 109; 111) vorgesehen ist, und dass der Steuerschaltkreis (110) und der Berührungssensor (108) so ausgebildet sind, dass die Sitzkomponente (107; 109; 111) durch das Ausüben einer Kraft in der Form einer Gleitbewegung über den Unterbereich des Berührungssensors (108) verstellbar ist.

12. Sitzsteuereinrichtung nach Anspruch 11, **dadurch gekennzeichnet, dass** die Sitzkomponente ein Sitzunterteils (111), eine Rückenlehne (107) oder eine Kopfstütze (109) ist.

13. Sitzsteuereinrichtung nach wenigstens einem der vorhergehenden Ansprüche, **dadurch gekennzeichnet, dass** der Steuerschaltkreis (110) die Richtung der Gleitbewegung über den Unterbereich (120, 124, 128, 132, 136, 140; 310, 320; 410, 412, 414) des Berührungssensor (108) ermittelt und Steuersignale zum Steuern der Sitzkomponente (107; 109; 111) in Abhängigkeit von der Richtung der Gleitbewegung über den Unterbereich des Berührungssensors (108) erzeugt.

14. Sitzsteuereinrichtung nach wenigstens einem der vorhergehenden Ansprüche, **dadurch gekennzeichnet, dass** der Steuerschaltkreis (110) die Geschwindigkeit der Gleitbewegung über den Unterbereich (120, 124, 128, 132, 136, 140; 310, 320; 410, 12, 414) des Berührungssensor (108) ermittelt und Steuersignale zum Steuern der Sitzkomponente (107; 109; 111) in Abhängigkeit von der Geschwindigkeit der Gleitbewegung über den Unterbereich des Berührungssensors (108) erzeugt.

15. Sitzsteuereinrichtung nach wenigstens einem der vorhergehenden Ansprüche, **dadurch gekennzeichnet, dass** der Steuerschaltkreis (110) und der Berührungssensor (108) so ausgebildet sind, dass der Steuerschaltkreis zwischen einer durch eine Gleitbewegung über den Unterbereich (120, 124, 128, 132, 136, 140; 310, 320; 410, 412, 414) des Berührungssensors (108) ausgeübten Kraft und einer nur an einem bestimmten Ort des Unterbereichs ausgeübten Kraft unterscheidet.

## Claims

1. Seat control device having a contact sensor (108) and a control circuit (110) which generates control signals for controlling a vehicle seat (106) on the basis of signals from the contact sensor, **characterized in that** the contact sensor (108) contains a touch-sensitive fabric (402) applied to a carrier layer (404), **in that** the contact sensor (108) generates signals in response to a force exerted on the touch-sensitive fabric (402), **in that** the control circuit (110) receives the signals generated by the contact sensor (108) and determines the location of the force exerted on the touch-sensitive fabric (402), and **in that** the control circuit (110) generates the control signals for controlling the vehicle seat (106) on the basis of the location of the force exerted on the touch-sensitive fabric (402).

2. Seat control device according to Claim 1, **characterized in that** the contact sensor (108) comprises a covering layer (301) and the touch-sensitive fabric (402) is arranged between the carrier layer (404) and the covering layer (301).

3. Seat control device according to Claim 1 or 2, **characterized in that** the carrier layer (404) is a vehicle interior component.

4. Seat control device according to Claim 3, **characterized in that** the vehicle interior component is a vehicle seat lower part (111), a central armrest (403), a door armrest (702), an inside door lining (502), a steering wheel, a dashboard, a centre console or a remote control unit (602).

5. Seat control device according to at least one of the preceding claims, **characterized in that** the control circuit (110) can be programmed in such a manner that the control circuit (110) and the contact sensor (108) can be used for different vehicle seats with different adjustment functions.

6. Seat control device according to at least one of the preceding claims, **characterized in that** the contact sensor (108) has raised graphical symbols (312, 314, 316, 318, 322, 324) for indicating the adjustment functions.

7. Seat control device according to at least one of the preceding claims, **characterized in that** the contact sensor (108) has raised arrows (312, 314, 316, 318, 322, 324) for indicating the respective adjustment directions.

8. Seat control device according to at least one of the preceding claims, **characterized in that** the contact sensor (108) has a raised schematic illustration of the vehicle seat (410, 412, 414).

9. Seat control device according to at least one of the preceding claims, **characterized in that** the control circuit (110) determines the level of the force exerted on the touch-sensitive fabric (402) and generates the control signals for controlling the vehicle seat (106) on the basis of the location and the level of the force exerted on the touch-sensitive fabric (402).

10. Seat control device according to at least one of the preceding claims, **characterized in that** the control circuit (110) can be programmed in such a manner that the adjustment speed of the vehicle seat (106) increases with the level of the force exerted on the touch-sensitive fabric.

11. Seat control device according to at least one of the preceding claims, **characterized in that** the contact sensor (108) has a subregion (120, 124, 128, 132, 136, 140; 310, 320; 410, 412, 414) which is intended to adjust a seat component (107; 109; 111), and **in that** the control circuit (110) and the contact sensor (108) are formed such that the seat component (107; 109; 111) can be adjusted by exerting a force in the form of a sliding movement across the subregion of the contact sensor (108).

12. Seat control device according to Claim 11, **characterized in that** the seat component is a seat lower part (111), a backrest (107) or a headrest (109).

13. Seat control device according to at least one of the preceding claims, **characterized in that** the control circuit (110) determines the direction of the sliding movement across the subregion (120, 124, 128, 132, 136, 140; 310, 320; 410, 412, 414) of the contact sensor (108) and generates control signals for controlling the seat component (107; 109; 111) on the basis of the direction of the sliding movement across the subregion of the contact sensor (108).

14. Seat control device according to at least one of the preceding claims, **characterized in that** the control circuit (110) determines the speed of the sliding movement across the subregion (120, 124, 128, 132, 136, 140; 310, 320; 410, 412, 414) of the contact sensor (108) and generates control signals for controlling the seat component (107; 109; 111) on the basis of the speed of the sliding movement across the subregion of the contact sensor (108).

15. Seat control device according to at least one of the preceding claims, **characterized in that** the control circuit (110) and the contact sensor (108) are formed such that the control circuit distinguishes between a force exerted by a sliding movement across the subregion (120, 124, 128, 132, 136, 140; 310, 320; 410, 412, 414) of the contact sensor (108) and a force exerted only at a particular location of the subregion.

## Revendications

1. Dispositif de commande de siège comprenant un détecteur de contact (108) et un circuit de commutation de commande (110), qui, en fonction de signaux du détecteur de contact, produit des signaux de commande pour commander un siège de véhicule (106), **caractérisé en ce que** le détecteur de contact (108) comprend un tissu (402) sensible au contact appliqué sur une couche porteuse (404), **en ce que** le détecteur de contact (108) produit des signaux en réponse à une force exercée sur le tissu (402) sensible au contact, **en ce que** le circuit de commutation de commande (110) reçoit les signaux produits par le détecteur de contact (108) et détermine le lieu de la force exercée sur le tissu (402) sensible au contact et **en ce que** le circuit de commutation de commande (110) produit les signaux de commande pour commander le siège de véhicule (106) en fonction du lieu de la force exercée sur le tissu (402) sensible au contact.

2. Dispositif de commande de siège selon la revendication 1, **caractérisé en ce que** le détecteur de contact (108) comprend une couche de recouvrement (301) et le tissu (402) sensible au contact est disposé entre la couche porteuse (404) et la couche de recouvrement (301).

3. Dispositif de commande de siège selon la revendication 1 ou 2, **caractérisé en ce que** la couche porteuse (404) est un composant d'habitacle d'un véhicule.

4. Dispositif de commande de siège selon la revendication 3, **caractérisé en ce que** le composant d'habitacle de véhicule est une partie inférieure d'un siège de véhicule (111), un accoudoir central (403), un accoudoir latéral (702), un habillage intérieur de porte (502), un volant de direction, un tableau de bord, une console centrale ou une unité de commande à distance (602).

5. Dispositif de commande de siège selon au moins l'une quelconque des revendications précédentes, **caractérisé en ce que** le circuit de commutation de commande (110) peut être programmé de telle sorte que le circuit de commutation de commande (110) et le détecteur de contact (108) puissent être utilisés pour différents sièges de véhicule avec des fonctions de réglage différentes.

6. Dispositif de commande de siège selon au moins l'une quelconque des revendications précédentes, **caractérisé en ce que** le détecteur de contact (108) présente des symboles graphiques rehaussés (312, 314, 316, 318, 322, 324) pour indiquer les fonctions de réglage.

7. Dispositif de commande de siège selon au moins l'une quelconque des revendications précédentes, **caractérisé en ce que** le détecteur de contact (108) présente des flèches rehaussées (312, 314, 316, 318, 322, 324) pour indiquer les directions de réglage respectives.

8. Dispositif de commande de siège selon au moins l'une quelconque des revendications précédentes, **caractérisé en ce que** le détecteur de contact (108) présente une illustration schématique rehaussée du siège du véhicule (410, 412, 414).

9. Dispositif de commande de siège selon au moins l'une quelconque des revendications précédentes, **caractérisé en ce que** le circuit de commutation de commande (110) détermine l'amplitude de la force exercée sur le tissu (402) sensible au contact et produit les signaux de commande pour commander le siège de véhicule (106) en fonction du lieu et de l'ampleur de la force exercée sur le tissu (402) sensible au contact.

10. Dispositif de commande de siège selon au moins l'une quelconque des revendications précédentes, **caractérisé en ce que** le circuit de commutation de commande (110) peut être programmé de telle sorte que la vitesse de réglage du siège de véhicule (106) augmente avec l'ampleur de la force exercée sur le tissu sensible au contact.

11. Dispositif de commande de siège selon au moins l'une quelconque des revendications précédentes, **caractérisé en ce que** le détecteur de contact (108) présente une région inférieure (120, 124, 128, 132, 136, 140 ; 310, 320 ; 410, 412, 414), qui est prévue pour régler un composant du siège (107 ; 109 ; 111), et **en ce que** le circuit de commutation de commande (110) et le détecteur de contact (108) sont réalisés de telle sorte que le composant du siège (107 ; 109 ; 111) puisse être réglé par l'application d'une force sous forme d'un mouvement de glissement sur la région inférieure du détecteur de contact (108).

12. Dispositif de commande de siège selon la revendication 11, **caractérisé en ce que** le composant du siège est une partie inférieure de siège (111), un dossier (107) ou un appuie-tête (109).

13. Dispositif de commande de siège selon au moins l'une quelconque des revendications précédentes, **caractérisé en ce que** le circuit de commutation de commande (110) détermine la direction du mouvement de glissement sur la région inférieure (120, 124, 128, 132, 136, 140 ; 310, 320 ; 410, 412, 414) du détecteur de contact (108) et produit des signaux de commande pour commander le composant du siège (107 ; 109 ; 111) en fonction de la direction du mouvement de glissement sur la région inférieure du détecteur de contact (108).

14. Dispositif de commande de siège selon au moins l'une quelconque des revendications précédentes, **caractérisé en ce que** le circuit de commutation de commande (110) détermine la vitesse du mouvement de glissement sur la région inférieure (120, 124, 128, 132, 136, 140 ; 310, 320 ; 410, 412, 414) du détecteur de contact (108) et produit des signaux de commande pour commander le composant du siège (107 ; 109 ; 111) en fonction de la vitesse du mouvement de glissement sur la région inférieure du détecteur de contact (108).

15. Dispositif de commande de siège selon au moins l'une quelconque des revendications précédentes, **caractérisé en ce que** le circuit de commutation de commande (110) et le détecteur de contact (108) sont réalisés de telle sorte que le circuit de commutation de commande fasse la distinction entre une force exercée par un mouvement de glissement sur la région inférieure (120, 124, 128, 132, 136, 140 ; 310, 320 ; 410, 412, 414) du détecteur de contact (108) et une force exercée uniquement en un lieu déterminé de la région inférieure.
